# EUROPEAN PATENT APPLICATION

(11) **EP 2 797 151 A1**
(43) Date of publication of application: **29.10.2014**
(21) Application number: 12861026.8
(22) Date of filing: 06.07.2012
(51) Int. Cl.: H01M 8/04

(54) **FUEL CELL SYSTEM AND METHOD FOR OPERATING SAME**

(30) Priority: 20.12.2011 JP 2011278108
(71) Applicant: Panasonic Corporation, Kadoma-shi, Osaka 571-8501 (JP)
(72) Inventor: KASAI, Masumi, Osaka 540-06207 (JP); NAKAYAMA, Atsushi, Osaka 540-6207 (JP); KATOU, Motomichi, Osaka 540-6207 (JP)
(74) Representative: Grünecker, Kinkeldey, Stockmair & Schwanhäusser
(86) International application number: PCT/JP2012/004396
(87) International publication number: WO 2013/094085

(57) **Abstract**

A fuel cell system (100) according to the present invention includes a stack (10); an antifreezing heater (20); a surplus power heater (30); a switching unit (40); and an electric power conversion unit (50). Where a first supply path denotes an electric power supply path from a system power supply (200) to the antifreezing heater (20), a second supply path denotes an electric power supply path from the stack (10) to the antifreezing heater (20), and a third supply path denotes an electric power supply path from the stack (10) to the surplus power heater (30), when a power failure happens, the switching unit (40) (i) disconnects the first supply path, (ii) disconnects the second supply path and connects the third supply path until an output electric power of the stack (10) is converted to the electric power necessary for operating the antifreezing heater (20), and (iii) connects the second supply path and disconnects the third supply path after the output electric power of the stack (10) is converted to the electric power necessary for operating the antifreezing heater (20).

## Description

### [Technical Field]

The present invention relates to a fuel cell system and a method for operating the same and, in particular, to a fuel cell system capable of operating an antifreezing heater properly even when electric power cannot be supplied from a system power supply due to a power failure or the like.

### [Background Art]

Conventionally, there is a possibility that, when a fuel cell system of this kind is installed in a low temperature place, water contained in a pipeline, a stack, etc. in its housing may freeze. Thus, the fuel cell system includes an antifreezing heater for raising an internal temperature of the housing. The antifreezing heater is activated when a temperature sensing means disposed around the stack, etc. detects a temperature lower than or equal to a predetermined temperature. In other words, the system is configured so as to be responsive to surrounding circumstances of operating the system and activates the antifreezing heater only when there is a possibility of freezing.

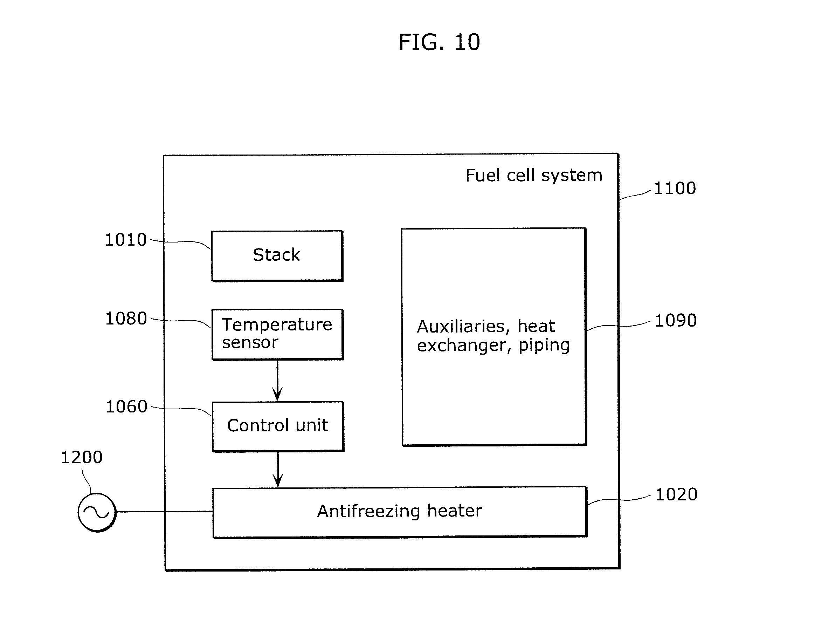

For example, Patent Literature 1 discloses a fuel cell system that prevents freezing inside this system. FIG. 10 illustrates a configuration of a conventional fuel cell system described in Patent Literature 1.

As shown in FIG. 10, a conventional fuel cell system 1100 includes a housing having therein a stack 1010, an antifreezing heater 1020 for preventing freezing of water contained in a pipeline and the stack 1010, a temperature sensor 1080 for sensing a temperature around the stack 1010 and a control unit 1060 for controlling the antifreezing heater 1020 so as to maintain the temperature around the stack 1010 to be a freezing point of water or higher. Further, the antifreezing heater 1020 is operated with the supply of electric power from a system power supply (a commercial power system) 1200.

### [Citation List]

### [Patent Literature]

[Patent Literature 1] WO 2009-034997

### [Summary of Invention]

### [Technical Problem]

However, when an electric power supply from the system power supply 1200 is interrupted due to a power failure or the like, the conventional fuel cell system 1100 cannot operate the antifreezing heater. Therefore, if the temperature around the stack 1010 becomes low, a problem arises in that the water contained in the pipeline, the stack, etc. cannot be heated and consequently freezes.

The present invention solves such a problem and aims to provide a fuel cell system capable of operating an antifreezing heater properly even during a power failure.

### [Solution to Problem]

In order to solve the problem mentioned above, one aspect of a fuel cell system according to the present invention includes a stack that generates electric power using a fuel gas; an antifreezing heater that prevents freezing within a housing; a surplus power heater that consumes excess electric power out of the electric power generated by the stack; a switching unit that switches an electric power supply path for supplying the electric power to the antifreezing heater or the surplus power heater; and an electric power conversion unit that converts output electric power of the stack to electric power necessary for operating the antifreezing heater. Where a first supply path denotes an electric power supply path from a system power supply to the antifreezing heater, a second supply path denotes an electric power supply path from the stack to the antifreezing heater, and a third supply path denotes an electric power supply path from the stack to the surplus power heater, when a power failure happens, the switching unit (i) disconnects the first supply path, (ii) disconnects the second supply path and connects the third supply path until the output electric power of the stack is converted to the electric power necessary for operating the antifreezing heater, and (iii) connects the second supply path and disconnects the third supply path after the output electric power of the stack is converted to the electric power necessary for operating the antifreezing heater.

### [Advantageous Effects of Invention]

According to one aspect of the present invention, even when the temperature around the housing becomes lower than a predetermined temperature during an interruption of electric power supply from the system power supply due to a power failure or the like, it is possible to operate the antifreezing heater properly, thereby preventing the freezing of water contained in the pipeline, the stack, etc.

### [Brief Description of Drawings]

[FIG. 1]

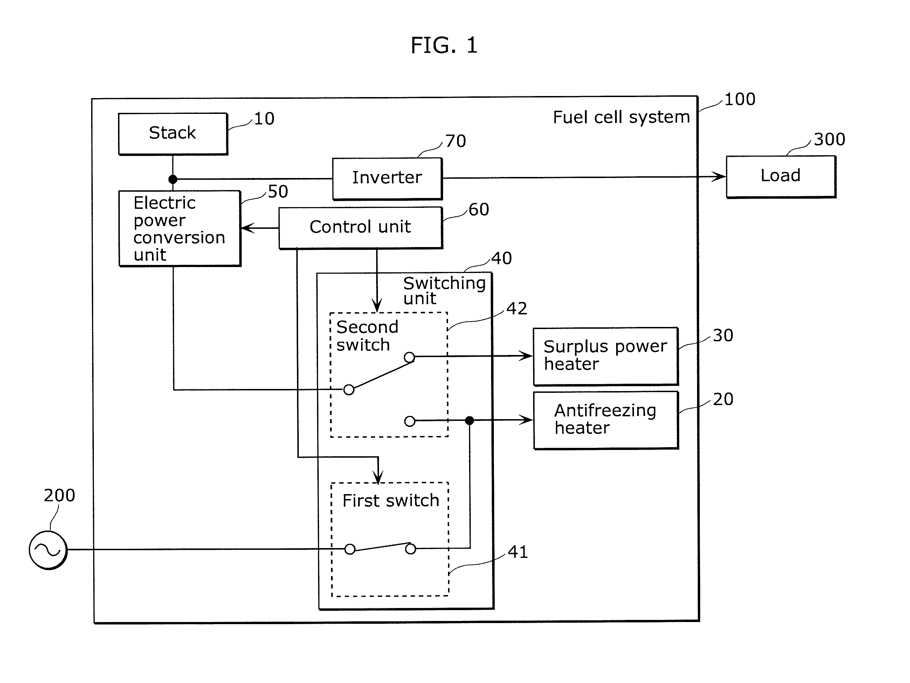

   FIG. 1 illustrates a configuration of a fuel cell system according to Embodiment 1 of the present invention.
[FIG. 2A]

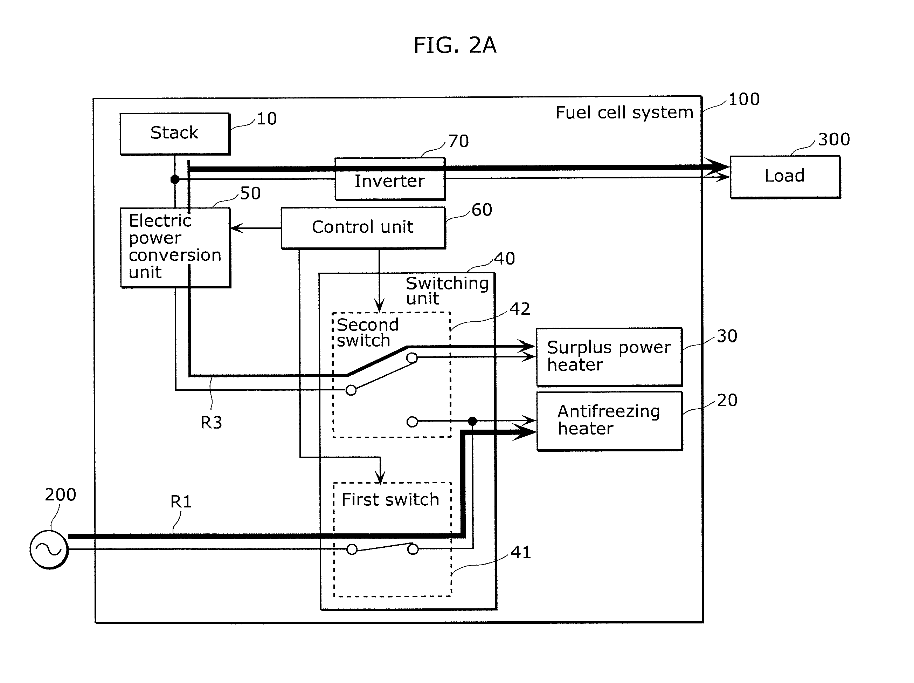

   FIG. 2A illustrates how an electric power supply path is connected during a non-power failure in the fuel cell system according to Embodiment 1 of the present invention.
[FIG. 2B]

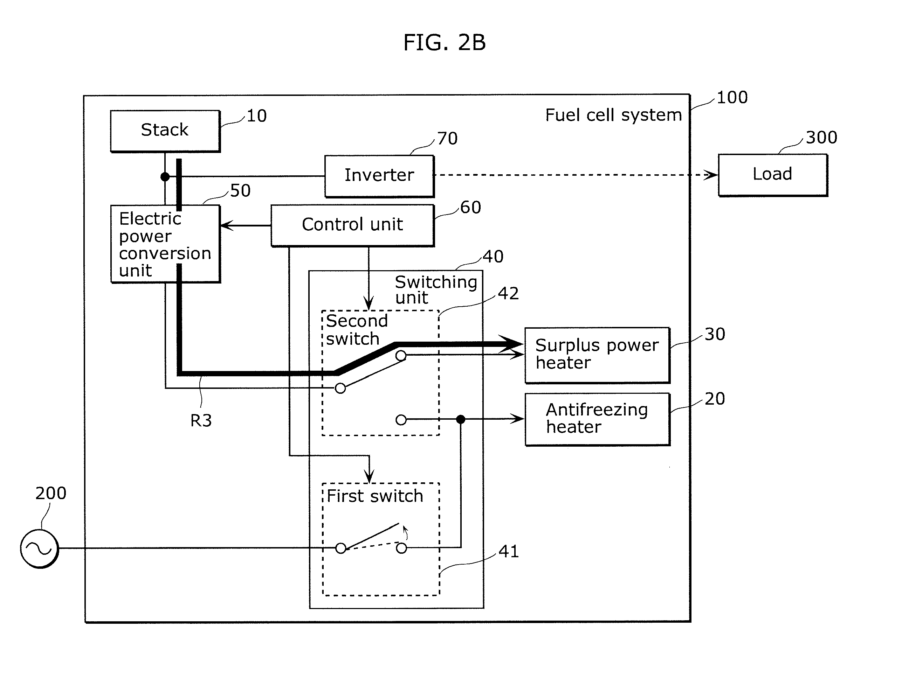

   FIG. 2B illustrates how the electric power supply path is connected immediately after a power failure in the fuel cell system according to Embodiment 1 of the present invention.
[FIG. 2C]

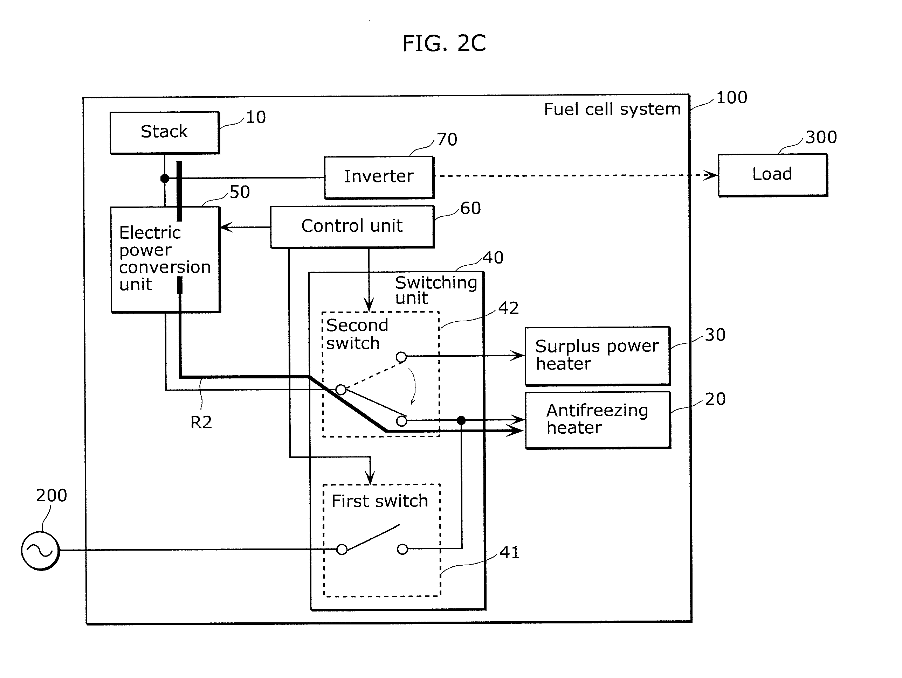

   FIG. 2C illustrates how the electric power supply path is connected during the power failure (after electric power conversion) in the fuel cell system according to Embodiment 1 of the present invention.
[FIG. 3]

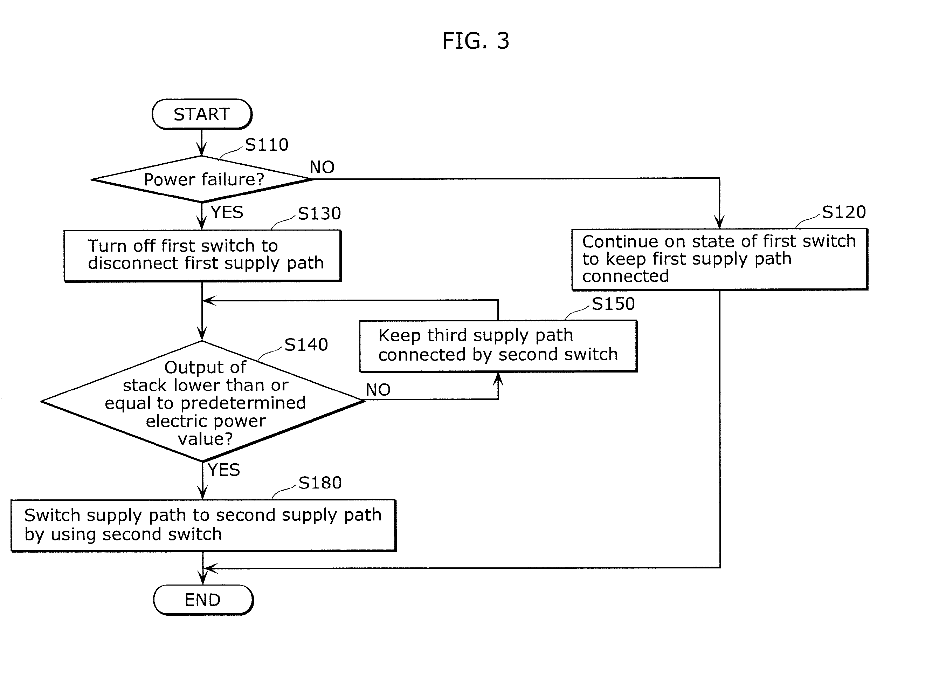

   FIG. 3 is a flowchart showing a method for operating the fuel cell system according to Embodiment 1 of the present invention.
[FIG. 4]

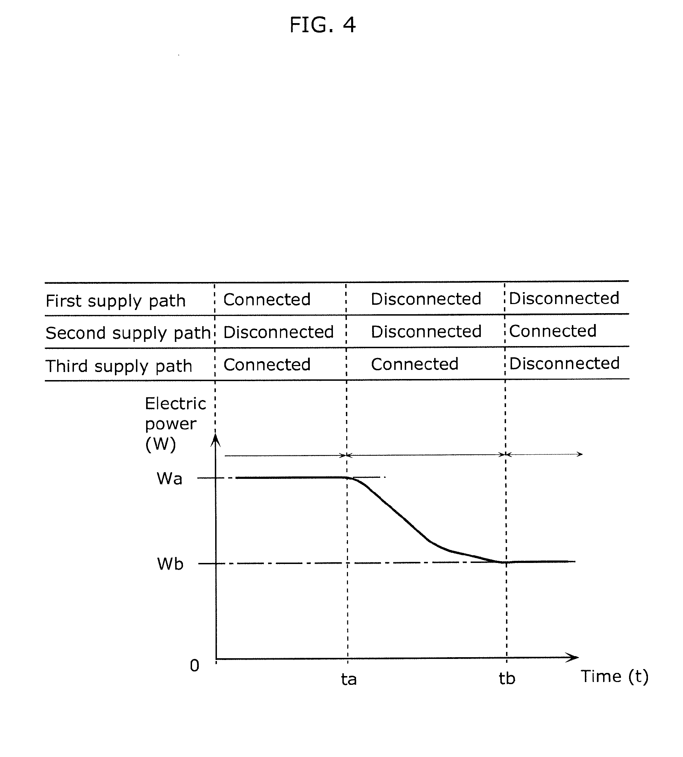

   FIG. 4 illustrates timing of switching a switching unit and a supply electric power in the fuel cell system according to Embodiment 1 of the present invention.
[FIG. 5]

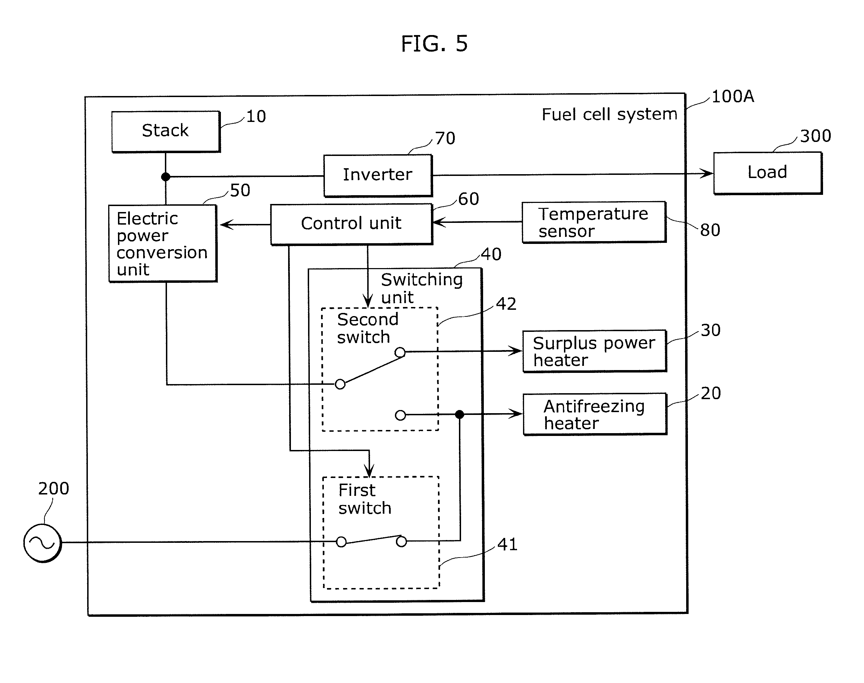

   FIG. 5 illustrates a configuration of a fuel cell system according to Embodiment 2 of the present invention.
[FIG. 6A]

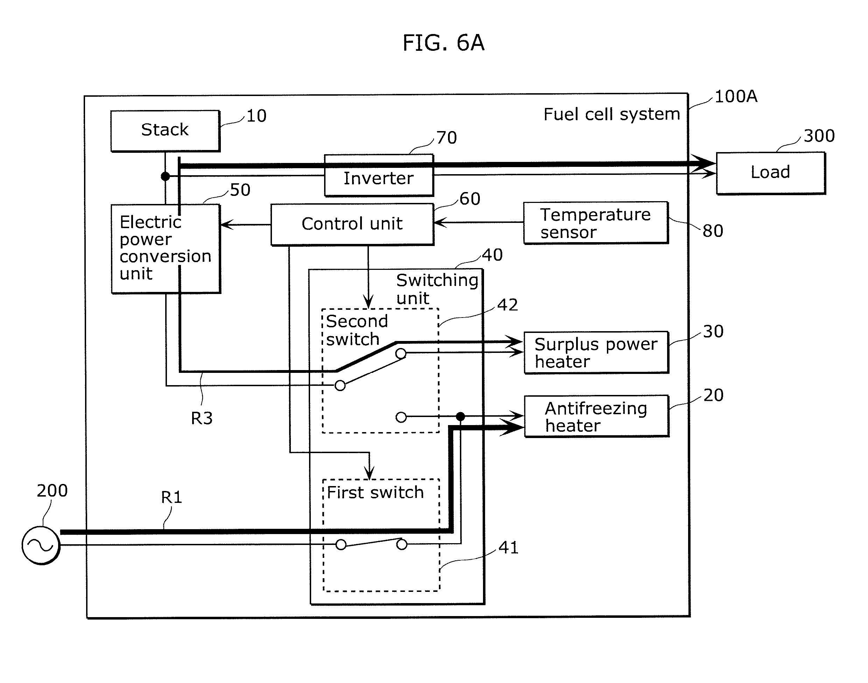

   FIG. 6A illustrates how an electric power supply path is connected during a non-power failure in the fuel cell system according to Embodiment 2 of the present invention.
[FIG. 6B]

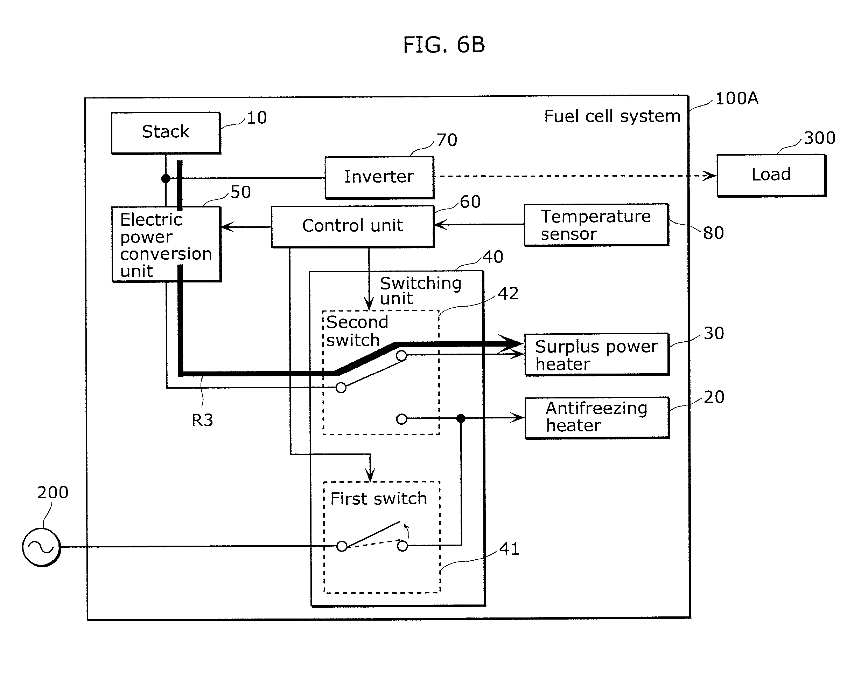

   FIG. 6B illustrates how the electric power supply path is connected immediately after a power failure in the fuel cell system according to Embodiment 2 of the present invention.
[FIG. 6C]

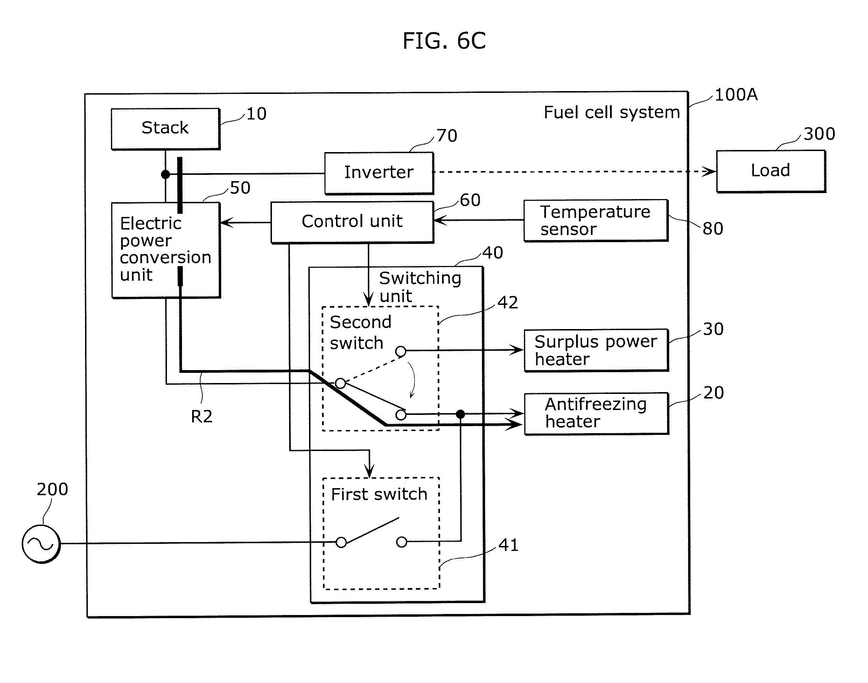

   FIG. 6C illustrates how the electric power supply path is connected during the power failure (during low temperature) in the fuel cell system according to Embodiment 2 of the present invention.
[FIG. 7]

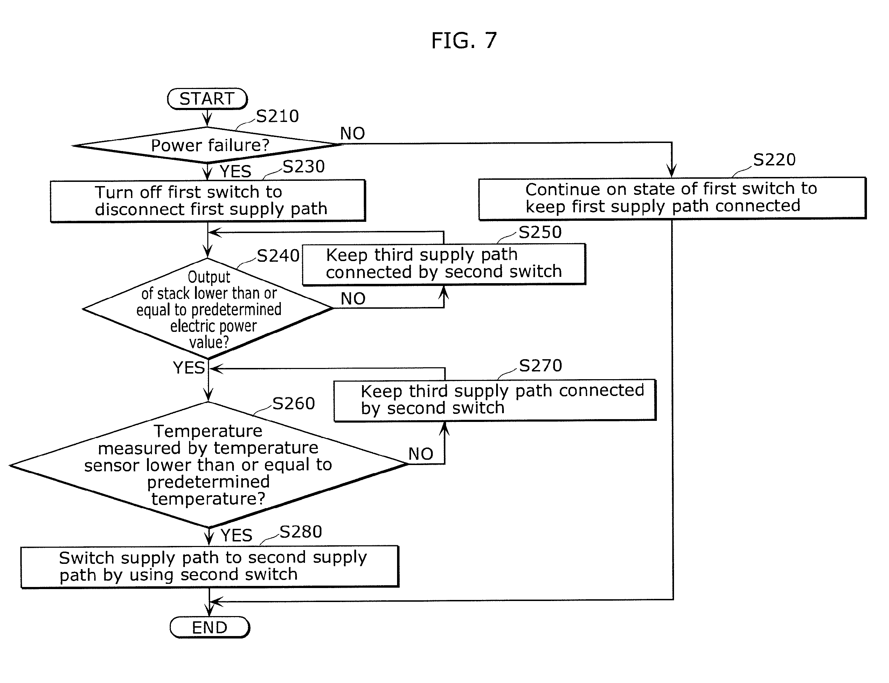

   FIG. 7 is a flowchart showing a method for operating the fuel cell system according to Embodiment 2 of the present invention.
[FIG. 8]

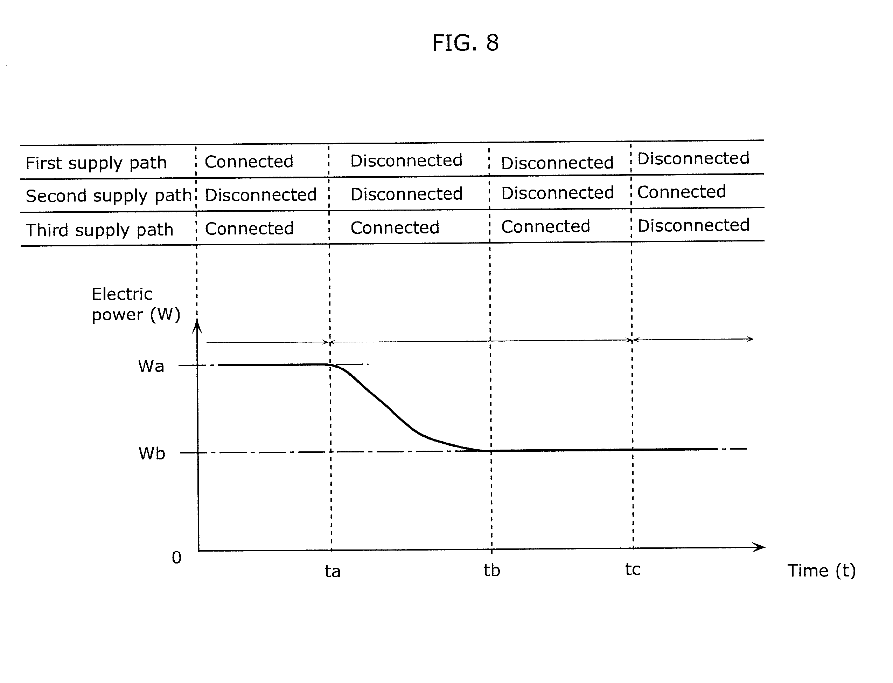

   FIG. 8 illustrates timing of switching a switching unit and a supply electric power in the fuel cell system according to Embodiment 2 of the present invention.
[FIG. 9]

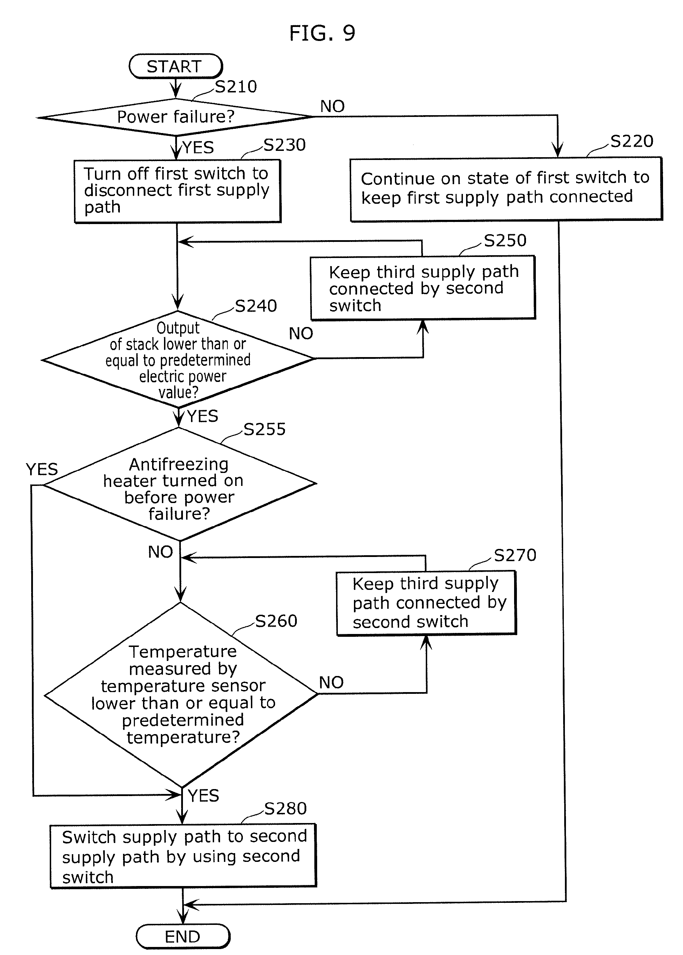

   FIG. 9 is a flowchart showing a method for operating a fuel cell system according to a variation of Embodiment 2 of the present invention.
[FIG. 10]
   FIG. 10 illustrates a configuration of a conventional fuel cell system described in Patent Literature 1.

### [Description of Embodiments]

### (Underlying Knowledge Forming Basis of the Present Invention)

As described above, in the conventional fuel cell system 1100 shown in FIG. 10, the antifreezing heater 1020 is operated with the supply of electric power from the system power supply 1200. Thus, when the electric power supply from the system power supply 1200 is interrupted due to a power failure or the like, the antifreezing heater 1020 cannot be operated. Therefore, if the temperature around the housing becomes low, a problem arises in that the water contained in the pipeline, the stack 1010, etc. cannot be heated and consequently freezes.

The inventors have found the above-described problem in the conventional fuel cell system. The present invention has been made based on the knowledge mentioned above, and it is an object of the present invention to provide a fuel cell system capable of operating an antifreezing heater properly even during a power failure.

In order to achieve the object mentioned above, one aspect of a fuel cell system according to the present invention includes a stack that generates electric power using a fuel gas; an antifreezing heater that prevents freezing within a housing; a surplus power heater that consumes excess electric power out of the electric power generated by the stack; a switching unit that switches an electric power supply path for supplying the electric power to the antifreezing heater or the surplus power heater; and an electric power conversion unit that converts output electric power of the stack to electric power necessary for operating the antifreezing heater. Where a first supply path denotes an electric power supply path from a system power supply to the antifreezing heater, a second supply path denotes an electric power supply path from the stack to the antifreezing heater, and a third supply path denotes an electric power supply path from the stack to the surplus power heater, when a power failure happens, the switching unit (i) disconnects the first supply path, (ii) disconnects the second supply path and connects the third supply path until the output electric power of the stack is converted to the electric power necessary for operating the antifreezing heater, and (iii) connects the second supply path and disconnects the third supply path after the output electric power of the stack is converted to the electric power necessary for operating the antifreezing heater.

With this aspect, when the electric power supply from the system power supply to the antifreezing heater is interrupted due to a power failure, electric power is supplied from the stack to the antifreezing heater by disconnecting the first supply path and connecting the second supply path. In this way, the electric power can be supplied to the antifreezing heater even during the power failure, thus making it possible to operate the antifreezing heater when the temperature around the housing drops. Consequently, water contained in the pipeline and the stack can be prevented from freezing.

Further, in this aspect, until the output electric power of the stack is converted to the electric power necessary for operating the antifreezing heater, the second supply path is kept disconnected and the third supply path is kept connected. After the output electric power of the stack is converted to the electric power necessary for operating the antifreezing heater, the second supply path is connected and the third supply path is disconnected. In other words, in the case of supplying the electric power of the stack to the antifreezing heater during the power failure, the electric power is supplied to the antifreezing heater after an output voltage of the stack is converted to a voltage necessary for operating the antifreezing heater. In this way, since control is provided so that the electric power is not supplied to the antifreezing heater until the output electric power of the stack is converted to the electric power suitable for the antifreezing heater, it is possible to prevent the antifreezing heater from deteriorating due to a load exceeding its specifications applied thereto and operate the antifreezing heater properly within its specifications.

Also, in one aspect of the fuel cell system according to the present invention, the switching unit may include a first switch that disconnects or connects the first supply path and a second switch that switches between the second supply path and the third supply path. When the power failure happens, the first switch may disconnect the first supply path, and the second switch may switch from the third supply path to the second supply path after the output electric power of the stack is converted to the electric power necessary for operating the antifreezing heater.

With this aspect, it is possible to switch the electric power supply path to the surplus power heater or the antifreezing heater by using the first switch and the second switch.

Further, one aspect of the fuel cell system according to the present invention may further include a temperature sensor that senses a temperature around the housing. It is preferable that, when the power failure happens and if the temperature sensed by the temperature sensor is lower than or equal to a predetermined temperature, the switching unit connects the second supply path and disconnects the third supply path, and when the power failure happens and if the temperature sensed by the temperature sensor is higher than the predetermined temperature, the switching unit disconnects the second supply path and connects the third supply path.

With this aspect, the electric power is supplied to the antifreezing heater according to the temperature around the housing. In this way, the electric power is not supplied to the antifreezing heater when the temperature around the housing is higher than the predetermined temperature even during a power failure, thus making it possible to prevent the antifreezing heater from being operated needlessly.

Moreover, in one aspect of the fuel cell system according to the present invention, it is preferable that, if the antifreezing heater is operated before the power failure, the switching unit connects the second supply path and disconnects the third supply path so as to continue operating the antifreezing heater also after the power failure regardless of a sensing result of the temperature sensor.

With this aspect, in the case where the antifreezing heater is operated before the power failure, it is possible to continue operating the antifreezing heater also after the power failure regardless of the sensing result of the temperature sensor. In other words, in the case where the antifreezing heater is already operated immediately before the power failure, the electric power of the stack is directed not to the surplus power heater but to the antifreezing heater without measuring the temperature with the temperature sensor. In this way, the antifreezing heater is not stopped, thus making it possible to continue an on state of the antifreezing heater both before and after the power failure.

Additionally, one aspect of a method for operating a fuel cell system according to the present invention is a method for operating a fuel cell system including a stack that generates electric power using a fuel gas, an antifreezing heater that prevents freezing within a housing, a surplus power heater that consumes excess electric power out of the electric power generated by the stack, and a switching unit that switches an electric power supply path for supplying the electric power to the antifreezing heater or the surplus power heater. The method includes, where a first supply path denotes an electric power supply path from a system power supply to the antifreezing heater, a second supply path denotes an electric power supply path from the stack to the antifreezing heater, and a third supply path denotes an electric power supply path from the stack to the surplus power heater, when a power failure happens, (i) disconnecting the first supply path, (ii) disconnecting the second supply path and connecting the third supply path until output electric power of the stack is converted to electric power necessary for operating the antifreezing heater, and (iii) connecting the second supply path and disconnecting the third supply path after the output electric power of the stack is converted to the electric power necessary for operating the antifreezing heater, the disconnecting and the connecting being performed by the switching unit.

With this aspect, when the electric power supply from the system power supply to the antifreezing heater is interrupted due to a power failure, electric power is supplied from the stack to the antifreezing heater by disconnecting the first supply path and connecting the second supply path. In this way, the electric power can be supplied to the antifreezing heater even during the power failure, thus making it possible to operate the antifreezing heater when the temperature around the housing drops. Consequently, water contained in the pipeline and the stack can be prevented from freezing.

Further, in this aspect, until the output electric power of the stack is converted to the electric power necessary for operating the antifreezing heater, the second supply path is kept disconnected and the third supply path is kept connected. After the output electric power of the stack is converted to the electric power necessary for operating the antifreezing heater, the second supply path is connected and the third supply path is disconnected. In this way, since control is provided so that the electric power is not supplied to the antifreezing heater until the output electric power of the stack is converted to the electric power suitable for the antifreezing heater, it is possible to operate the antifreezing heater properly within its specifications.

Moreover, in one aspect of the method for operating a fuel cell system according to the present invention, the switching unit may include a first switch that disconnects or connects the first supply path and a second switch that switches between the second supply path and the third supply path. The method may include, when the power failure happens, disconnecting the first supply path by the first switch; and switching from the third supply path to the second supply path by the second switch after the output electric power of the stack is converted to the electric power necessary for operating the antifreezing heater.

Also, in one aspect of the method for operating a fuel cell system according to the present invention, the fuel cell system may further include a temperature sensor that senses a temperature around the housing. The method may include, when the power failure happens and if the temperature sensed by the temperature sensor is lower than or equal to a predetermined temperature, connecting the second supply path and disconnecting the third supply path by the switching unit; and when the power failure happens and if the temperature sensed by the temperature sensor is higher than the predetermined temperature, disconnecting the second supply path and connecting the third supply path by the switching unit.

Furthermore, in one aspect of the method for operating a fuel cell system according to the present invention, it is preferable to include, if the antifreezing heater is operated before the power failure, connecting the second supply path and disconnecting the third supply path by the switching unit so as to continue operating the antifreezing heater also after the power failure regardless of a sensing result of the temperature sensor.

The following is a description of a fuel cell system and a method for operating the fuel cell system according to embodiments of the present invention, with reference to accompanying drawings. It should be noted that any of the embodiments described below will illustrate one specific example of the present invention. Thus, the numerical values, structural components, the arrangement and connection of the structural components, steps and the order of the steps mentioned in the following embodiments are merely an example and not intended to limit the present invention. Accordingly, among the structural components in the following embodiments, the one that is not recited in any independent claim exhibiting the most generic concept of the present invention will be described as an arbitrary structural component. Also, in individual figures, substantially the same structural components are assigned the same reference signs.

### [Embodiment 1]

First, referring to FIG. 1, a fuel cell system 100 according to Embodiment 1 of the present invention will be described. FIG. 1 illustrates a configuration of the fuel cell system according to Embodiment 1 of the present invention.

As shown in FIG. 1, the fuel cell system 100 according to the present embodiment is a home-use fuel cell system owned by a consumer and includes a stack 10, an antifreezing heater 20, a surplus power heater 30, a switching unit 40, an electric power conversion unit 50, a control unit 60 and an inverter 70. These structural components are received in a housing (a fuel cell unit main body). Incidentally, other than the structural components mentioned above, the housing receives gas piping for a fuel gas or the like, piping serving as a flow path of water or hot water (pipeline), a heat exchanger for turning water into hot water by heat (an exhaust heat recovery system) and an air supply device for supplying the air (oxygen) necessary for power generation.

The stack 10 is a cell stack that generates electric power by causing a reaction between a fuel gas and an oxidant gas. For example, the stack 10 generates direct current power by causing a reaction between a hydrogen gas and oxygen. In the present embodiment, the stack 10 outputs a constant 750 W (DC 15 V) direct current power. It should be noted that heat is generated simultaneously with this power generation by the stack 10 and utilized to heat water to be hot water. More specifically, water is heated to be hot water by the heat exchanger and then stored in a hot water storage tank.

The antifreezing heater 20 is a heater for maintaining the temperature around the housing to be a freezing point of water or higher. When the temperature around the housing becomes low, the antifreezing heater 20 is operated so as to prevent water contained in the pipeline and the stack 10 inside the housing from freezing. Thus, one or more antifreezing heaters 20 are provided around a place where water is present, for example, piping through which water flows or the stack 10. The antifreezing heater 20 is capable of both being supplied with electric power from a system power supply 200 via a first switch 41 and being supplied with electric power from the stack 10 via a second switch 42.

Also, the antifreezing heater 20 is operable with either direct current power or alternating current power and can be, for example, an AC 200 V 180 W resistance heater. In the present embodiment, the antifreezing heater 20 is operated both with the alternating current power supplied from the system power supply 200 and with the direct current power supplied from the stack 10.

The surplus power heater 30 is a surplus power consuming load that consumes excess electric power out of the electric power generated in the stack 10. In other words, when the electric power generated in the stack 10 exceeds an electric power load (an internal load of auxiliaries, etc. disposed in the housing or an external load 300), the surplus power heater 30 collects and consumes a surplus power that cannot be consumed by the electric power load.

It is preferable that the capacity of the surplus power heater 30 is set considering output electric power (a maximum output electric power) of the stack 10. In the present embodiment, since the direct current power outputted from the stack 10 is 750 W, a heater that has a maximum power consumption of 712.5 W and is operated with direct current power is used as the surplus power heater 30, considering the amount of power consumption by the internal load (auxiliaries) of the fuel cell system 100. Incidentally, the electric power consumed in the surplus power heater 30 is converted to heat, which is also utilized as a heat source for heating water.

The switching unit 40 is a switch device that switches the electric power supply path for supplying electric power to the antifreezing heater 20 or the surplus power heater 30. The switching unit 40 in the present embodiment includes a first switch 41 and a second switch 42.

The first switch 41 can be, for example, a single pole single throw switch and disconnects or connects the electric power supply path from the system power supply 200 to the antifreezing heater 20 (a first supply path R1). For example, in an on state (a closed state) of the first switch 41, the alternating current power is supplied from the system power supply 200 to the antifreezing heater 20. In an off state (an open state) of the first switch 41, the electric power supply from the system power supply 200 to the antifreezing heater 20 is interrupted. The control unit 60 controls the on/off state of the first switch 41.

The second switch 42 can be, for example, a single pole double throw switch and switches mutually exclusively between the electric power supply path from the stack 10 to the antifreezing heater 20 (a second supply path R2) and the electric power supply path from the stack 10 to the surplus power heater 30 (a third supply path R3). In other words, the third supply path is connected when the second supply path is disconnected by the second switch 42, whereas the third supply path is disconnected when the second supply path is connected. Further, when the second supply path is disconnected (the third supply path is connected) by the second switch 42, the electric power supply to the antifreezing heater 20 is interrupted. Also, when the second supply path is connected (the third supply path is disconnected) by the second switch 42, the direct current power (a post-conversion electric power) from the stack 10 is supplied to the antifreezing heater 20. It should be noted that the second switch 42 can be configured using a relay or a semiconductor such as an FET, for example, and that the control unit 60 controls the switching of the electric power supply path by the second switch 42.

The electric power conversion unit 50 is an electric power conversion circuit that converts the output electric power of the stack 10. In other words, the electric power conversion unit 50 is configured to vary an electric power value in the third supply path and converts a value of the electric power outputted from the stack 10 to a desired value. In the present embodiment, the electric power conversion unit 50 converts the output electric power of the stack 10 to a lower electric power that is necessary for operating the antifreezing heater 20. In other words, the output electric power of the stack 10 is converted until the output electric power of the electric power conversion unit 50 is equal to a set electric power of the antifreezing heater 20.

For example, since the stack 10 has output electric power of 750 W and the antifreezing heater 20 has a power consumption of 180 W in the present embodiment, the electric power conversion unit 50 down-converts 750 W of direct current power outputted from the stack 10 to 180 W of direct current power. Incidentally, the control unit 60 controls the electric power conversion unit 50 and thus can set and adjust as appropriate how low the electric power should be converted to.

The control unit 60 is a controller that controls various internal devices in the housing, for example, the switching unit 40 and the electric power conversion unit 50. More specifically, the control unit 60 controls the electric power conversion unit 50 so as to convert the output electric power of the stack 10 to the electric power necessary for operating the antifreezing heater 20.

Also, the control unit 60 controls the switching unit 40 so as to operate the antifreezing heater 20 desirably, thereby maintaining the temperature around the stack 10 to be a freezing point of water or higher.

For example, the control unit 60 controls the first switch 41, thereby starting or interrupting the electric power supply from the system power supply 200 to the antifreezing heater 20. Further, the control unit 60 controls the second switch 42, thereby switching between the electric power supply from the stack 10 to the antifreezing heater 20 and that from the stack 10 to the surplus power heater 30.

The inverter 70 converts direct current power generated by the stack 10 to alternating current power. The alternating current power from the inverter 70 is supplied to the load 300, which is an external load. Incidentally, the inverter 70 is provided with a CT (Current Transformer) sensor.

The system power supply (commercial power system) 200 is a system that supplies alternating current power from an electric power supplier to a consumer and supplies alternating current power at a predetermined voltage and a predetermined frequency to a consumer. The system power supply 200 supplies, for example, a 200 V 50/60 Hz alternating current power to a consumer. The fuel cell system 100 is interconnected to the system power supply 200 and, in the present embodiment, configured so that alternating current power is supplied from the system power supply 200 to the antifreezing heater 20 via the first switch 41.

The load 300 is at least one electric power load (loading apparatus) that consumes electric power on a consumer side. The load 300 consumes alternating current power supplied from the fuel cell system 100 or the system power supply 200. The load 300 is a domestic load such as an electric appliance, for example, a refrigerator, an air conditioner, a television set, a microwave oven or a lighting fixture used at standard home.

Now, an operation (an operating method) of the fuel cell system 100 configured as above will be explained with reference to FIGs. 2A to 2C and 3. FIGs. 2A to 2C illustrate how the electric power supply path is connected in the fuel cell system according to the present embodiment. FIG. 3 is a flowchart showing a method for operating the fuel cell system according to the present embodiment.

First, in a normal state (during a non-power failure), namely, a state where a consumer can be supplied with electric power from the system power supply 200, electric power is supplied to the antifreezing heater 20 via a first supply path R1 as shown in FIG. 2A. Thus, when the temperature around the housing drops in the normal state and the antifreezing heater 20 is operated, the antifreezing heater 20 is operated by alternating current power from the system power supply 200.

In this case, the second switch 42 is connected to the surplus power heater 30 as shown in FIG. 2A. Consequently, when the stack 10 generates electric power, excess electric power out of the electric power generated by the stack 10 is directed via the third supply path R3 and consumed by the surplus power heater 30. It should be noted that, since the surplus power heater 30 can be operated normally regardless of the magnitude of electric power to be supplied, the output electric power of the stack 10 need not be down-converted by the electric power conversion unit 50.

Next, the control unit 60 determines whether or not a power failure is happening due to a disaster, a scheduled outage or the like. In other words, it is determined whether or not there is a power failure (Step S110 in FIG. 3). Whether or not a power failure is happening can be detected from an interruption of a zero cross signal (alternating current power) from the system power supply 200, a voltage drop or the like. For example, using a sensor (e.g., a CT sensor) interconnected with the system power supply 200, it is possible to detect a power failure or a non-power failure by whether or not an electric current is flowing in this sensor.

As a result of the determination, if the power failure is not happening (NO in S110 of FIG. 3), the on state of the first switch 41 is continued to keep the first supply path R1 connected (Step S120 in FIG. 3).

On the other hand, as a result of the determination, if the power failure is detected (YES in S110 of FIG. 3), namely, the electric power supply from the system power supply 200 is interrupted due to the power failure, the interruption of the electric power supply from the system power supply 200 causes the antifreezing heater 20 to be inoperable by the electric power from the system power supply 200.

At this time, by switching a source of the electric power supplied to the antifreezing heater 20 from the system power supply 200 to the stack 10, it becomes possible to operate the antifreezing heater 20. However, if the electric power from the stack 10 were supplied directly to the antifreezing heater 20, a load exceeding the specifications of the antifreezing heater 20 might be applied to the antifreezing heater 20 depending on the value of the output electric power of the stack 10, so that the antifreezing heater 20 cannot be operated properly within its specifications in some cases. Accordingly, in the present embodiment, the source of the electric power supplied to the antifreezing heater 20 is switched from the system power supply 200 to the stack 10 as described below.

First, when the power failure happens, the first switch 41 is once turned off to disconnect the first supply path R1 as shown in FIG. 2B (Step S130 in FIG. 3). Further, in this case, the electric power supply from the fuel cell system 100 to the load 300 is once interrupted, and the fuel cell system 100 is once disconnected from the system power supply 200. Incidentally, in the present embodiment, no electric power will be supplied from the fuel cell system 100 to the load 300 thereafter. The electric power from the stack 10 will be consumed for protecting the fuel cell system 100 during the power failure, namely, for preventing water in the housing from freezing during the power failure.

Further, immediately after the power failure happens, since the third supply path R3 is connected (the second supply path is disconnected) by the second switch 42 as shown in FIG. 2B, the electric power generated by the stack 10 is supplied via the third supply path R3 to the surplus power heater 30. As described above, in the present embodiment, when the power failure happens, the output electric power from the stack 10 is not supplied directly to the antifreezing heater 20. The electric power from the stack 10 is consumed by the surplus power heater 30 before being supplied to the antifreezing heater 20.

Then, until the output electric power of the stack 10 is converted to electric power necessary for operating the antifreezing heater 20, the third supply path R3 is kept connected. After the output electric power of the stack 10 is converted to the electric power necessary for operating the antifreezing heater 20, the switching unit 40 is controlled so as to connect the second supply path R2 and disconnect the third supply path R3.

In the present embodiment, the electric power conversion unit 50 converts the output electric power of the stack 10 to the electric power necessary for operating the antifreezing heater 20. At this time, the control unit 60 determines whether or not the output electric power of the stack 10 is converted to a predetermined value of the electric power that is necessary for operating the antifreezing heater 20 (Step S140 in FIG. 3). Incidentally, in the present embodiment, the output electric power of the stack 10 is converted until the output electric power of the electric power conversion unit 50 is substantially equal to a set electric power of the antifreezing heater 20.

As a result, if the value of the post-conversion electric power from the stack 10 (the output electric power of the electric power conversion unit 50) is greater than the above-noted predetermined electric power value (NO in S140 of FIG. 3), the electric power supply path using the second switch 42 is the third supply path R3, and the third supply path R3 is kept connected (the second supply path R2 is kept disconnected) (Step S150 in FIG. 3). In other words, the electric power from the stack 10 is supplied via the third supply path R3 to the surplus power heater 30.

On the other hand, if the value of the post-conversion electric power from the stack 10 is smaller than or equal to the above-noted electric power value (YES in S140 of FIG. 3), the second switch 42 switches the electric power supply path from the third supply path R3 to the second supply path R2 as shown in FIG. 2C (Step S180 in FIG. 3). In this manner, a destination of the electric power supply from the stack 10 is switched from the surplus power heater 30 to the antifreezing heater 20. Consequently, the electric power from the stack 10 is directed via the second supply path R2 and supplied to the antifreezing heater 20, thus causing the antifreezing heater 20 to be operable (drivable). Accordingly, since the antifreezing heater 20 can be operated in the case where water contained in a pipeline or the stack 10 may freeze due to a decrease in the temperature around the housing in winter or in a cold climate area, for example, it is possible to prevent the water in the pipeline (water path) or the stack 10 from freezing even during the power failure.

Now, referring to FIG. 4, timing of switching the switching unit 40 in the operation discussed above will be described. FIG. 4 illustrates the timing of switching the switching unit and a supply electric power in the fuel cell system according to the present embodiment. In FIG. 4, a horizontal axis indicates time (t), and a vertical axis indicates electric power (W).

As shown in FIG. 4, before time ta when the power failure happens, the first supply path R1 is connected, so that the antifreezing heater 20 is supplied with the electric power from the system power supply 200. At this time, the second switch 42 is connected with the third supply path R3, so that the electric power outputted from the electric power conversion unit 50 is supplied to the surplus power heater 30. In this case, since the output electric power of the stack 10 is not converted by the electric power conversion unit 50, electric power Wa at time ta is surplus electric power out of the electric power generated by the stack 10. It should be noted that the electric power Wa as the surplus electric power varies according to the usage state of the load 300 and does not exceed the output electric power of the stack 10 (maximum output electric power).

Next, when the control unit 60 detects the power failure at time ta, the first supply path R1 is disconnected. Until time tb when the electric power conversion unit 50 converts the output electric power of the stack 10 to electric power Wb necessary for operating the antifreezing heater 20, the second supply path R2 is kept disconnected and the third supply path R3 is kept connected. In other words, until the electric power outputted from the electric power conversion unit 50 varies from the electric power Wa at time ta and stabilizes at the electric power Wb necessary for operating the antifreezing heater 20, the third supply path R3 is used to supply the electric power from the stack 10 to the surplus power heater 30.

Thereafter, when the electric power outputted from the electric power conversion unit 50 stabilizes at the electric power Wb necessary for operating the antifreezing heater 20 at time tb, it becomes possible to supply the electric power to the antifreezing heater 20. Accordingly, the second switch 42 is used to switch the electric power supply path from the third supply path R3 to the second supply path R2, thus supplying the electric power to the antifreezing heater 20.

As described above, with the fuel cell system 100 according to Embodiment 1 of the present invention, when the electric power supply from the system power supply 200 to the antifreezing heater 20 is interrupted due to a power failure or the like, the electric power is supplied from the stack 10 to the antifreezing heater 20 by disconnecting the first supply path R1 using the first switch 41 and then connecting the second supply path R2 using the second switch 42. In this way, the electric power can be supplied to the antifreezing heater 20 even during the power failure, thus making it possible to operate the antifreezing heater 20 when the temperature around the housing drops. Thus, water contained in the pipeline and the stack 10 in the housing can be heated, thereby preventing the water from freezing. As a result, it is possible to always keep a safe state of the fuel cell system even during the power failure.

Furthermore, with the fuel cell system 100 according to the present embodiment, the destination of the electric power outputted from the stack 10 is switched between the surplus power heater 30 and the antifreezing heater 20. In the present embodiment, when the electric power is to be supplied to the antifreezing heater 20 during the power failure, the second switch 42 is not switched until the output electric power of the stack 10 is converted to the electric power necessary for operating the antifreezing heater 20, and thus the second supply path R2 is kept disconnected and the third supply path R3 is kept connected. Then, after the electric power conversion unit 50 converts the output electric power of the stack 10 to the electric power necessary for operating the antifreezing heater 20, the second switch 42 switches the electric power supply path to the antifreezing heater 20 so as to connect the second supply path R2 and disconnect the third supply path R3. In other words, when the electric power of the stack 10 is to be supplied to the antifreezing heater 20 during the power failure, after the electric power conversion unit 50 down-converts the output electric power of the stack 10 to the electric power necessary for operating the antifreezing heater, namely, after the output electric power of the electric power conversion unit 50 is reduced to electric power suitable for operating the antifreezing heater 20, the electric power is supplied to the antifreezing heater 20.

As described above, since the electric power is not supplied to the antifreezing heater 20 until the output electric power of the stack 10 is converted to electric power suitable for the antifreezing heater 20, a load exceeding the specifications of the antifreezing heater 20 is not applied to this antifreezing heater 20. Therefore, it is possible to prevent the deterioration of the antifreezing heater 20 such as a break or a short-circuit due to the load exceeding its specifications applied thereto, so that the antifreezing heater 20 can be operated properly within its specifications.

### [Embodiment 2]

Now, referring to FIG. 5, a fuel cell system 100A according to Embodiment 2 of the present invention will be described. FIG. 5 illustrates a configuration of the fuel cell system according to Embodiment 2 of the present invention.

As shown in FIG. 5, the fuel cell system 100A according to the present embodiment is provided by adding a temperature sensor 80 for sensing the temperature around the housing to the fuel cell system 100 according to Embodiment 1.

The temperature sensor 80 includes a temperature measuring device that measures the temperature inside or around the housing, and temperature information sensed by the temperature sensor 80 is outputted to the control unit 60. The control unit 60 determines whether to operate the antifreezing heater 20 based on the temperature information sensed by the temperature sensor 80 and controls the switching unit 40 so that the antifreezing heater 20 starts operating.

More specifically, in the fuel cell system 100A according to the present embodiment, when the temperature around the housing drops so that the temperature sensed by the temperature sensor 80 is lower than or equal to a predetermined temperature, the second supply path R2 is used to supply the electric power from the stack 10 to the antifreezing heater 20 so as to operate the antifreezing heater 20 in order to prevent the water contained in the pipeline and the stack 10 from freezing.

For example, in the case of starting the operation of the antifreezing heater 20 when an ambient temperature outside the housing drops to 4°C or lower, the antifreezing heater 20 is operated (turned on) if the temperature sensed by the temperature sensor 80 is 4°C or lower.

Hereinafter, the operation of (method for operating) the fuel cell system 100A according to the present embodiment will be described with reference to FIGs. 6A to 6C and 7. FIGs. 6A to 6C illustrate how the electric power supply path is connected in the fuel cell system according to the present embodiment. FIG. 7 is a flowchart showing the method for operating the fuel cell system according to the present embodiment.

First, similarly to Embodiment 1, in a normal state (during a non-power failure), electric power is supplied to the antifreezing heater 20 via the first supply path R1 as shown in FIG. 6A. In other words, the antifreezing heater 20 is supplied with alternating current power from the system power supply 200. Thus, when the temperature around the housing drops so that the temperature sensor 80 senses that the temperature around the housing is lower than or equal to the predetermined temperature, the antifreezing heater 20 is operated by the alternating current power from the system power supply 200.

In this case, since the second switch 42 is connected to the surplus power heater 30 as shown in FIG. 6A, the surplus electric power from the stack 10 is directed via the third supply path R3 and consumed by the surplus power heater 30 similarly to Embodiment 1.

Next, similarly to Embodiment 1, the control unit 60 determines whether or not there is a power failure (Step S210 in FIG. 7). Whether or not a power failure is happening can be detected from an interruption of a zero cross signal from the system power supply 200 or a voltage drop similarly to Embodiment 1.

If the result of the determination shows that the power failure is not happening (NO in S210 of FIG. 7), the on state of the first switch 41 is continued to keep the first supply path R1 connected (Step S220 in FIG. 7).

On the other hand, if the result of the determination shows that the power failure is detected (YES in S210 of FIG. 7), the electric power supply from the system power supply 200 is interrupted, so that the antifreezing heater 20 is no longer operable by the electric power from the system power supply 200.

At this time, similarly to Embodiment 1, a source of the electric power supplied to the antifreezing heater 20 is switched from the system power supply 200 to the stack 10. However, in the present embodiment, the antifreezing heater 20 is operated based on the sensing result of the temperature sensor 80 as described below.

First, when the power failure happens, the first switch 41 is once turned off to disconnect the first supply path R1 as shown in FIG. 6B (Step S230 in FIG. 7). Further, immediately after the power failure happens, since the third supply path R3 is connected (the second supply path is disconnected) by the second switch 42 as shown in FIG. 6B, the electric power generated by the stack 10 is directed via the third supply path R3 and supplied to the surplus power heater 30. As described above, also in the present embodiment, when the power failure happens, the output electric power from the stack 10 is not supplied directly to the antifreezing heater 20 but consumed by the surplus power heater 30 before being supplied to the antifreezing heater 20.

Then, similarly to Embodiment 1, until the electric power conversion unit 50 converts the output electric power of the stack 10 to electric power necessary for operating the antifreezing heater 20, the third supply path R3 is kept connected. After the output electric power of the stack 10 is converted to the electric power necessary for operating the antifreezing heater 20, control is provided so as to connect the second supply path R2 and disconnect the third supply path R3. At this time, the control unit 60 determines whether or not the output electric power of the stack 10 is converted to at most a predetermined value of the electric power that is necessary for operating the antifreezing heater 20 (Step S240 in FIG. 7). Incidentally, also in the present embodiment, the output electric power of the stack 10 is converted until the output electric power of the electric power conversion unit 50 is substantially equal to a set electric power of the antifreezing heater 20.

As a result, if the value of the post-conversion electric power from the stack 10 (the output electric power of the electric power conversion unit 50) is greater than the above-noted predetermined electric power value (NO in S240 of FIG. 7), the electric power supply path using the second switch 42 is the third supply path R3, and the third supply path R3 is kept connected (the second supply path R2 is kept disconnected) (Step S250 in FIG. 7). In other words, the electric power from the stack 10 is directed via the third supply path R3 and supplied to the surplus power heater 30.

On the other hand, if the value of the post-conversion electric power from the stack 10 is smaller than or equal to than the above-noted predetermined electric power value (YES in S240 of FIG. 7), the temperature sensor 80 further measures the temperature around the housing, and the control unit 60 determines whether or not the measured temperature is lower than or equal to the predetermined temperature that necessitates the operation of the antifreezing heater 20 (Step S260 in FIG. 7).

As a result, if the temperature measured by the temperature sensor 80 is higher than the predetermined temperature (NO in S260 of FIG. 7), it is not necessary to supply the electric power to the antifreezing heater 20 for operating the antifreezing heater 20. For example, assuming the predetermined temperature (threshold) for starting the operation of the antifreezing heater 20 is set to 4°C (outside air temperature), the antifreezing heater 20 need not be operated if the temperature around the housing (outside air) sensed by the temperature sensor 80 is higher than 4°C. In this case, therefore, the electric power supply path using the second switch 42 is the third supply path R3, and thus the third supply path R3 is kept connected (the second supply path R2 is kept disconnected) (Step S270 in FIG. 7). In other words, the electric power from the stack 10 is directed via the third supply path R3 and supplied to the surplus power heater 30.

On the other hand, if the temperature around the housing drops so that the temperature measured by the temperature sensor 80 is lower than or equal to the predetermined temperature (YES in S260 of FIG. 7), it is necessary to operate the antifreezing heater 20 in order to prevent the water contained in the pipeline and the stack 10 inside the housing from freezing. For example, assuming that the predetermined temperature (threshold) for starting the operation of the antifreezing heater 20 is set to 4°C (outside air temperature) as described above, the antifreezing heater 20 need be operated if the temperature around the housing (outside air) sensed by the temperature sensor 80 is lower than or equal to 4°C. In this case, therefore, the second switch 42 switches the electric power supply path from the third supply path R3 to the second supply path R2 as shown in FIG. 6C (Step S280 in FIG. 7). In this manner, a destination of the electric power supply from the stack 10 is switched from the surplus power heater 30 to the antifreezing heater 20. As a result, since the electric power from the stack 10 is directed via the second supply path R2 and supplied to the antifreezing heater 20, it is possible to start the operation of the antifreezing heater 20. Consequently, even during the power failure, the water contained in the pipeline (water path) and the stack 10 can be prevented from freezing.

Now, referring to FIG. 8, timing of switching the switching unit 40 in the operation discussed above will be described. FIG. 8 illustrates the timing of switching the switching unit and a supply electric power in the fuel cell system according to the present embodiment. In FIG. 8, a horizontal axis indicates time (t), and a vertical axis indicates electric power (W).

As shown in FIG. 8, before time ta when the power failure happens, the first supply path R1 is connected, so that the antifreezing heater 20 is supplied with the electric power from the system power supply 200, similarly to Embodiment 1. At this time, the second switch 42 is connected with the third supply path R3, so that the electric power outputted from the electric power conversion unit 50 is supplied to the surplus power heater 30.

Next, when the control unit 60 detects the power failure at time ta, the first supply path R1 is disconnected similarly to Embodiment 1. Until time tb when the electric power conversion unit 50 converts the output electric power of the stack 10 to electric power Wb necessary for operating the antifreezing heater 20, the second supply path R2 is kept disconnected and the third supply path R3 is kept connected.

In the present embodiment, even after the output electric power of the stack 10 is converted to the electric power Wb necessary for operating the antifreezing heater 20, the second supply path R2 is kept disconnected and the third supply path R3 is kept connected until time tc when the temperature measured by the temperature sensor 80 is lower than or equal to the predetermined temperature, unlike Embodiment 1. In other words, even after the electric power outputted from the electric power conversion unit 50 varies from the electric power Wa at time ta and stabilizes at the electric power Wb necessary for operating the antifreezing heater 20, the third supply path R3 is used to supply the electric power from the stack 10 to the surplus power heater 30 until the temperature around the housing is lower than or equal to than a temperature that necessitates the operation of the antifreezing heater 20.

Then, when the temperature measured by the temperature sensor 80 is lower than or equal to the predetermined temperature at time tc, the second switch 42 is used to switch the electric power supply path from the third supply path R3 to the second supply path R2, thereby supplying the electric power to the antifreezing heater 20 and starting operating the antifreezing heater 20.

As described above, with the fuel cell system 100A according to Embodiment 2 of the present invention, even when the electric power supply from the system power supply 200 to the antifreezing heater 20 is interrupted due to a power failure or the like, the electric power is supplied from the stack 10 to the antifreezing heater 20 via the second supply path R2 similarly to Embodiment 1. In this way, when the temperature sensor 80 senses that the temperature around the housing drops to the predetermined temperature or lower, the antifreezing heater 20 is operated, thereby preventing water contained in the pipeline and the stack 10 in the housing from freezing. Thus, it is possible to always keep a safe state of the fuel cell system even during the power failure.

Furthermore, with the fuel cell system 100A according to the present embodiment, the destination of the electric power outputted from the stack 10 is switched between the surplus power heater 30 and the antifreezing heater 20. Then, in the present embodiment, during the power failure and when the temperature sensed by the temperature sensor 80 is higher than the predetermined temperature, the second switch 42 is not switched so that the second supply path R2 is kept disconnected and the third supply path R3 is kept connected until the output electric power of the stack 10 is converted to electric power necessary for operating the antifreezing heater 20. Further, after the electric power conversion unit 50 converts the output electric power of the stack 10 to the electric power necessary for operating the antifreezing heater 20, the second switch 42 is used to connect the second supply path R2 and disconnect the third supply path R3 if the temperature sensed by the temperature sensor 80 is lower than or equal to the predetermined temperature.

In this way, also in the present embodiment, when the electric power of the stack 10 is to be supplied to the antifreezing heater 20 during the power failure, the electric power conversion unit 50 down-converts the output electric power of the stack 10 to the electric power necessary for operating the antifreezing heater, followed by supplying the electric power to the antifreezing heater 20. Accordingly, a load exceeding the specifications of the antifreezing heater 20 is not applied to this antifreezing heater 20. Therefore, it is possible to prevent a break, a short-circuit or the like due to the applied load exceeding the specifications, so that the antifreezing heater 20 can be operated properly within its specifications.

Moreover, in the present embodiment, if the temperature measured by the temperature sensor 80 is higher than the predetermined temperature, namely, the temperature around the housing is higher than or equal to the predetermined temperature, the electric power is not supplied to the antifreezing heater 20 even during the power failure, thus making it possible to prevent the antifreezing heater 20 from being operated needlessly.

### [Variation]

Now, a fuel cell system according to a variation of Embodiment 2 of the present invention will be described. Since the configuration of the fuel cell system according to the present variation is similar to that shown in FIG. 5, the description thereof will be omitted. Further, the present variation and Embodiment 2 have different operations of the fuel cell system. Hereinafter, the operation of (method for operating) the fuel cell system according to the present variation will be described with reference to FIG. 9. FIG. 9 is a flowchart showing the method for operating the fuel cell system according to the variation of Embodiment 2 of the present invention. It should be noted that the description will be mainly directed to a point different from Embodiment 2.

The present variation determines whether or not the output electric power of the stack 10 is converted to electric power having a predetermined value or lower of the electric power that is necessary for operating the antifreezing heater 20 (Step S240 in FIG. 9), and if the value of the post-conversion electric power from the stack 10 is lower than or equal to the above-noted predetermined electric power value (YES in S240 of FIG. 9), the control unit 60 further determines whether or not the antifreezing heater 20 was being operated before the power failure (Step S255 in FIG. 9).

If the antifreezing heater 20 was being operated before the power failure, the control unit 60 does not measure the temperature around the housing by the temperature sensor 80 and controls the switching unit 40 to continue operating the antifreezing heater 20 also after the power failure. In other words, the switching unit 40 switches the electric power supply path from the third supply path R3 to the second supply path R2 (Step S280 in FIG. 9). In the present embodiment, the second switch 42 connects the second supply path R2 and disconnects the third supply path R3.

For example, assuming that the predetermined temperature (threshold) for operating the antifreezing heater 20 is set to 4°C (outside air temperature), if the antifreezing heater 20 was already being operated before the power failure, the operation of the antifreezing heater 20 is continued even when the temperature around the housing (outside air) is higher than 4°C (for example, 5°C).

On the other hand, if the antifreezing heater 20 was not being operated before the power failure, the control unit 60 measures the temperature around the housing by the temperature sensor 80 and determines whether or not the measured temperature is lower than or equal to the predetermined temperature that necessitates the operation of the antifreezing heater 20 similarly to Embodiment 2 (Step S260 in FIG. 9).

If the result shows that the temperature measured by the temperature sensor 80 is higher than the predetermined temperature (NO in S260 of FIG. 9), the third supply path R3 is kept connected (the second supply path R2 is kept disconnected) (Step S270 in FIG. 9).

On the other hand, if the temperature around the housing drops so that the temperature measured by the temperature sensor 80 is lower than or equal to the predetermined temperature (YES in S260 of FIG. 9), the second switch 42 switches the electric power supply path from the third supply path R3 to the second supply path R2 in order to operate the antifreezing heater 20 to prevent the water contained in the pipeline and the stack 10 from freezing (Step S280 in FIG. 9).

As described above, with the present variation, it is possible to produce a similar effect to the fuel cell system according to Embodiment 2.

Further, with the present variation, if the antifreezing heater 20 was being operated before the power failure, the operation of the antifreezing heater 20 is continued also after the power failure regardless of the sensing result of the temperature sensor 80. In other words, if the antifreezing heater 20 was already being operated immediately before the power failure, the destination of the electric power supply from the stack 10 is set not to the surplus power heater 30 but to the antifreezing heater 20 without sensing the temperature by the temperature sensor 80. This continues the on state of the antifreezing heater 20 both before and after the power failure without stopping the operation of the antifreezing heater 20. Consequently, it is possible to prevent the antifreezing heater 20 from being turned on/off repeatedly.

### [Others]

The above description has been directed to an electric power supply system and an electric power supply method according to the present invention based on the embodiments and variation. However, the present invention is not limited to the embodiments and variation described above.

For example, in Embodiment 1, Embodiment 2 and its variation described above, an AC/DC converter may be provided in the first supply path R1. This makes it possible to convert alternating current power from the system power supply 200 to direct current power, so that the antifreezing heater 20 can be configured to be operated with the direct current power.

Also, in Embodiment 1, Embodiment 2 and its variation described above, an inverter may be provided in the second supply path R2. This makes it possible to convert direct current power from the stack 10 to alternating current power, allowing the antifreezing heater 20 to be configured to be operated with the alternating current power.

Moreover, in Embodiment 1, Embodiment 2 and its variation described above, a boosting DC/DC converter may be provided between the stack 10 and the inverter 70. This can raise the output voltage of the stack 10.

Furthermore, Embodiment 2 and its variation described above have carried out the electric power determining step (S240) of determining whether or not the output electric power of the stack 10 is converted to electric power having a predetermined value of the electric power necessary for operating the antifreezing heater 20 and the temperature determining step (S260) of determining whether or not the temperature is lower than or equal to the predetermined temperature that necessitates the operation of the antifreezing heater 20 in this order. However, these steps may be carried out in a reversed order. In other words, the electric power determining step (S240) may be carried out after the temperature determining step (S260). It should be noted, however, that the electric power determining step (S240) is more preferably carried out before the temperature determining step (S260). This is because, by carrying out the electric power determining step (S240) in advance to down-convert the output electric power of the stack 10, the destination of the electric power supply from the stack 10 can be switched from the surplus power heater 30 to the antifreezing heater 20 immediately after the temperature around the housing drops.

Moreover, the present invention can be realized not only as the fuel cell system or the method for operating the fuel cell system but also as a program causing a computer to execute steps included in the above-noted operating method. Furthermore, such a program can be recorded in a computer-readable recording medium (for example, a flexible disk, a hard disk, a CD-ROM, an MO, a DVD, a DVD-ROM, a DVD-RAM, a BD, a USB memory, a memory card such as an SD card, a semiconductor memory or the like) or distributed via a transmission medium such as the Internet.

Also, part or all of the structural components constituting the fuel cell system according to the present invention can be realized as an integrated circuit (LSI: Large Scale Integration). These structural components may be individually made into a single chip or may be partially or entirely made into a single chip. The integrated circuit is sometimes referred to as an IC (Integrated Circuit), a system LSI, a super LSI or an ultra LSI depending on the degree of integration.

It should be noted that, other than the above, a mode obtained by making various modifications conceivable by a person skilled in the art to different embodiments and variations and a mode configured by any combination of the structural components and functions in different embodiments and variations as long as not departing from the purport of the present invention fall within the scope of the present invention.

### [Industrial Applicability]

The fuel cell system according to the present invention can supply electric power to the antifreezing heater also during a power failure and is thus applicable widely to uses as a cogeneration system or the like such as a fuel cell.

### [Reference Signs List]

- 10: Stack
- 20: Antifreezing heater
- 30: Surplus power heater
- 40: Switching unit
- 41: First switch
- 42: Second switch
- 50: Electric power conversion unit
- 60: Control unit
- 70: Inverter
- 80: Temperature sensor
- 100, 100A: Fuel cell system
- 200: System power supply

## Claims

1. A fuel cell system comprising:
a stack that generates electric power using a fuel gas;
an antifreezing heater that prevents freezing within a housing;
a surplus power heater that consumes excess electric power out of the electric power generated by the stack;
a switching unit configured to switch an electric power supply path for supplying the electric power to the antifreezing heater or the surplus power heater; and
an electric power conversion unit configured to convert output electric power of the stack to electric power necessary for operating the antifreezing heater,
wherein, where a first supply path denotes an electric power supply path from a system power supply to the antifreezing heater, a second supply path denotes an electric power supply path from the stack to the antifreezing heater, and a third supply path denotes an electric power supply path from the stack to the surplus power heater,
when a power failure happens,
the switching unit is configured to (i) disconnect the first supply path, (ii) disconnect the second supply path and connect the third supply path until the output electric power of the stack is converted to the electric power necessary for operating the antifreezing heater, and (iii) connect the second supply path and disconnect the third supply path after the output electric power of the stack is converted to the electric power necessary for operating the antifreezing heater.

2. The fuel cell system according to Claim 1,
wherein the switching unit includes a first switch that disconnects or connects the first supply path and a second switch that switches between the second supply path and the third supply path, and
when the power failure happens,
the first switch disconnects the first supply path, and
the second switch switches from the third supply path to the second supply path after the output electric power of the stack is converted to the electric power necessary for operating the antifreezing heater.

3. The fuel cell system according to Claim 1 or 2, further comprising
a temperature sensor that senses a temperature around the housing,
wherein, when the power failure happens and if the temperature sensed by the temperature sensor is lower than or equal to a predetermined temperature, the switching unit is configured to connect the second supply path and disconnect the third supply path, and
when the power failure happens and if the temperature sensed by the temperature sensor is higher than the predetermined temperature, the switching unit is configured to disconnect the second supply path and connect the third supply path.

4. The fuel cell system according to Claim 3,
wherein, if the antifreezing heater is operated before the power failure, the switching unit is configured to connect the second supply path and disconnect the third supply path so as to continue operating the antifreezing heater also after the power failure regardless of a sensing result of the temperature sensor.

5. A method for operating a fuel cell system including a stack that generates electric power using a fuel gas, an antifreezing heater that prevents freezing within a housing, a surplus power heater that consumes excess electric power out of the electric power generated by the stack, and a switching unit that switches an electric power supply path for supplying the electric power to the antifreezing heater or the surplus power heater, the method comprising
where a first supply path denotes an electric power supply path from a system power supply to the antifreezing heater, a second supply path denotes an electric power supply path from the stack to the antifreezing heater, and a third supply path denotes an electric power supply path from the stack to the surplus power heater,
when a power failure happens, (i) disconnecting the first supply path, (ii) disconnecting the second supply path and connecting the third supply path until output electric power of the stack is converted to electric power necessary for operating the antifreezing heater, and (iii) connecting the second supply path and disconnecting the third supply path after the output electric power of the stack is converted to the electric power necessary for operating the antifreezing heater, the disconnecting and the connecting being performed by the switching unit.

6. The method for operating a fuel cell system according to Claim 5,
wherein the switching unit includes a first switch that disconnects or connects the first supply path and a second switch that switches between the second supply path and the third supply path, and
the method comprises:
when the power failure happens,
disconnecting the first supply path by the first switch; and
switching from the third supply path to the second supply path by the second switch after the output electric power of the stack is converted to the electric power necessary for operating the antifreezing heater.

7. The method for operating a fuel cell system according to Claim 5 or 6,
wherein the fuel cell system further includes a temperature sensor that senses a temperature around the housing, and
the method comprises:
when the power failure happens and if the temperature sensed by the temperature sensor is lower than or equal to a predetermined temperature, connecting the second supply path and disconnecting the third supply path by the switching unit; and
when the power failure happens and if the temperature sensed by the temperature sensor is higher than the predetermined temperature, disconnecting the second supply path and connecting the third supply path by the switching unit.

8. The method for operating a fuel cell system according to Claim 7, comprising
if the antifreezing heater is operated before the power failure, connecting the second supply path and disconnecting the third supply path by the switching unit so as to continue operating the antifreezing heater also after the power failure regardless of a sensing result of the temperature sensor.
